# EUROPÄISCHE PATENTSCHRIFT

(11) **EP 2 710 259 B1**
(45) Veröffentlichungstag und Bekanntmachung des Hinweises auf die Patenterteilung: **24.08.2016**
(21) Anmeldenummer: 12710497.4
(22) Anmeldetag: 20.03.2012
(51) Int. Cl.: F16H 57/02, F03D 5/00

(54) **WINDKRAFTGETRIEBE**
WIND TURBINE GEAR MECHANISM
TRANSMISSION D'ÉOLIENNE

(30) Priorität: 19.05.2011 DE 102011076114
(43) Veröffentlichungstag der Anmeldung: 26.03.2014
(73) Patentinhaber: ZF Friedrichshafen AG, 88046 Friedrichshafen (DE); Vestas Wind Systems A/S, 8940 Randers SV (DK)
(72) Erfinder: WALLISER, Jochen, 88048 Friedrichshafen (DE); KIENZLE, Alfred, 88699 Frickingen (DE); KIRSCHNER, Tino, 88048 Friedrichshafen (DE); PETERSEN, Knud Erik, DK-7500 Holstebro (DK)
(86) Internationale Anmeldenummer: PCT/EP2012/054855
(87) Internationale Veröffentlichungsnummer: WO 2012/156128

(56) Entgegenhaltungen:
- CN-Y- 2 580 136
- CN-Y- 201 129 406
- DE-A1- 10 159 973
- US-A- 2 911 845

## Beschreibung

Die vorliegende Erfindung betrifft ein Windkraftgetriebe gemäß dem Oberbegriff des Anspruches 1.

Bei Getrieben im Antriebsstrang von Windkraftanlagen kommt einer einfachen Wartung und Instandhaltung eine besondere Bedeutung zu, weil die Randbedingungen bei Windkraftanlagen durch die exponierte Lage an der Spitze eines bis zu über 100 Meter hohen Turmes außergewöhnlich schwierig sind. Zudem sind die Abmaße und die Masse eines typischen Getriebes im Antriebsstrang einer Windkraftanlage mit einer Leistung von mehreren Megawatt so groß, dass auch durch die Masse und die Größe der einzelnen Bauteile des Getriebes der Aufwand beispielsweise für einen sicheren und zügigen Austausch von Bauteilen sehr hoch ist.

Bekannte Getriebe im Antriebsstrang von Windkraftanlagen weisen häufig eine antriebsseitig angeordneten Planetenradstufe und mehrere abtriebsseitig angeordnete Stirnradstufen auf, wobei die Drehzahlen der Wellen mit jeder Übersetzungsstufe höher werden, um ausgehend von der langsam drehenden Rotorwelle der Windkraftanlage schließlich am Generator zur Stromerzeugung geeignete, höhere Drehzahlen zu erreichen. Insbesondere die schneller laufenden abtriebsseitigen Stirnradstufen in derartigen Windkraftgetrieben bedürfen einer regelmäßigen Wartung und häufigeren Instandsetzungsarbeiten, verbunden mit dem Austausch von Getriebeteilen.

CN 201129406 Y offenbart die Merkmale des Oberbegriffs des Anspruchs 1.

Aus der DE 101 59 973 A1 ist ein Windkraftgetriebe bekannt mit einer rotor- bzw. antriebsseitig angeordneten Planetenradstufe und zwei ausgangs- bzw. generatorseitig angeordnete Stirnradstufen. Dabei ist in der ersten Stirnradstufe eine Leistungsverzweigung auf zwei Zwischenwellen vorgesehen. Die in der DE 101 59 973 A1 vorgeschlagenen Ausführungen eines Windkraftgetriebes sehen unter anderem mehrere Gehäuseteilfugen in dem Gehäuse für die ausgangsseitig angeordneten Stirnradstufen vor. Dabei wird jedoch das Getriebegehäuseteil der Stirnradstufen in so viele Gehäuseteile aufgeteilt, dass dadurch ein verhältnismäßig hoher Herstell- und Montageaufwand entsteht.

Daneben sind auch noch andere Lösungen bekannt, bei denen die Mittelachsen von zwei parallel zueinander angeordneten Getriebewellen eines Windkraftgetriebes in einer gemeinsamen Ebene mit einer Trennfuge des Getriebegehäuses liegen. Diese Anordnung hat den Vorteil, dass nach dem Trennen der Gehäuseteile an der einen Trennfuge beide Getriebewellen ausgebaut werden können. Allerdings ergeben sich bei den derartigen bekannten Anordnungen in großen Windkraftanlagen zwei Getriebegehäusehälften, die zu schwer und/oder zu groß sind, als dass sie vor Ort, d.h. in der Gondel auf dem Turm einer Windkraftanlage voneinander getrennt und ausgebaut werden könnten. Bei derartigen Ausführungen des Getriebegehäuses ist zum Austausch von Getriebebauteilen ein separater Kran notwendig, der die Bauteile vom Boden aus anhebt. Dies stellt einen erheblichen Aufwand dar.

Es ist die Aufgabe der vorliegenden Erfindung ein Windkraftgetriebe mit einer antriebsseitig angeordneten Planetenradstufe und zwei abtriebsseitig angeordneten Stirnradstufen zu schaffen, bei dem sich alle Teile einer schnelldrehenden Stirnradstufe auf dem Turm der Windkraftanlage austauschen lassen, wobei das Windkraftgetriebe möglichst einfach aufgebaut, kostengünstig herstellbar und einfach montierbar sein soll.

Diese Aufgabe wird durch ein Windkraftgetriebe gemäß Patentanspruch 1 gelöst. Die abhängigen Ansprüche beinhalten bevorzugte Weiterbildungen der Erfindung.

Das erfindungsgemäße Windkraftgetriebe weist eine antriebsseitig angeordnete Planetenradstufe und eine erste und eine zweite Stirnradstufe auf, wobei die beiden Stirnradstufen im Kraftfluss nach der Planetenradstufe in einem Getriebegehäuse angeordnet sind. Eine mit dem Rotor der Windkraftanlage drehfest verbundene Getriebeeingangswelle bildet die langsam laufende Eingangswelle der Planetenradstufe. Die erste Stirnradstufe verbindet drehwirksam eine Ausgangswelle der Planetenradstufe, die Sonnenradwelle, mit einer Zwischenwelle. Die zweite Stirnradstufe verbindet wiederum die Zwischenwelle drehwirksam mit einer Abtriebswelle. Es ist nur eine Zwischenwelle vorgesehen. Die Abtriebswelle ist mit mindestens einem Generator der Windkraftanlage wirkverbunden. Typischerweise werden die Drehzahlen der Wellen mit jeder Übersetzungsstufe höher, um ausgehend von dem langsam drehenden Rotor der Windkraftanlage schließlich am Generator zur Stromerzeugung geeignete, höhere Drehzahlen zu erreichen.

Das Getriebegehäuse weist erfindungsgemäß eine Trennfuge auf, entlang derer das Getriebegehäuse in ein Gehäusehauptteil und einen Gehäusedeckel geteilt ist, wobei die Trennfuge durch die Mittelachse der Zwischenwelle verläuft und die Trennfuge beabstandet von der Mittelachse der Sonnenradwelle angeordnet ist, so dass entgegen den im Stand der Technik bekannten Ausführungen nur eine Getriebewelle der Stirnradstufen, nämlich die Zwischenwelle, im Verlauf einer Trennfuge liegt.

Die einfache Austauschbarkeit der meisten Teile der Stirnradstufen vor Ort ist zum einen deshalb möglich, weil die Zwischenwelle mit ihren Lagerteilen nach dem Abheben des leichten Gehäusedeckels durch die dadurch geschaffene Öffnung austauschbar ist und weil zum anderen die Abtriebswelle als Ritzelwelle der zweiten Stirnradstufe derart ausgeführt ist, dass die Ritzelwelle zusammen mit ihrer Lagerung in axialer Richtung ausgebaut werden kann. Der Gehäusedeckel ist im Vergleich zu den aus dem Stand der Technik bekannten Ausführungen leichter und kleiner ausführbar, weil die Trennfuge nur durch die Mittelachse einer Getriebewelle, nämlich der Zwischenwelle, verläuft. Dementsprechend ist der Gehäusedeckel in Bezug auf seine Größe und seine Masse vorzugsweise derart ausgestaltet, dass der Gehäusedeckel und die Zwischenwelle vor Ort aus dem Windkraftgetriebe ausbaubar sind. Die Masse des Gehäusedeckels darf beispielsweise nur so groß sein, dass er von einem in oder an der Gondel der Windkraftanlage angeordneten Bordkran mit begrenzter Hublast angehoben und transportiert werden kann.

Bevorzugt ist die Trennfuge im Windkraftgetriebe oberhalb der Sonnenradwelle angeordnet, sodass der Gehäusedeckel beispielsweise mit dem Bordkran der Gondel abgehoben werden kann. Weiter vereinfacht werden die Gehäusetrennung und das vertikale Abheben des Gehäusedeckels, wenn die Trennfuge zumindest nahezu horizontal verläuft. Es ist auch denkbar, dass die Trennfuge unterhalb der Sonnenradwelle angeordnet ist, wobei der Gehäusedeckel in diesem Fall nach unten abgelassen werden kann.

Um den einfachen Austausch von Getriebeteilen aus der Getriebegehäuse zu gewährleisten beträgt die Masse des Gehäusedeckels vorzugsweise höchstens die Hälfte der Masse des Gehäusehauptteiles.

Der Gehäusehauptteil weist bevorzugt einen Verbindungsflansch für die Verbindung mit einem Gegenflansch an einem Gehäuseteil der Planetenradstufe auf, beispielsweise einen Schraubflansch. Für Instandhaltungsmaßnahmen in den Stirnradstufen muss das Getriebegehäuse jedoch nicht von dem Planetenradstufengehäuse getrennt werden, weil fast alle Teile der beiden Stirnradstufen über den Gehäusedeckel des Getriebegehäuses zugänglich und austauschbar sind.

Die Erfindung wird anhand eines Ausführungsbeispieles, das in den nachfolgenden Figuren dargestellt ist, näher erläutert.

### In den Figuren zeigen

- Fig. 1: den schematischen Aufbau eines erfindungsgemäßen Windkraftgetriebes,
- Fig. 2: eine Seitenansicht eines erfindungsgemäßen Windkraftgetriebes,
- Fig. 3: eine Ansicht eines Windkraftgetriebes aus dem Stand der Technik von der Abtriebsseite aus betrachtet und
- Fig. 4: eine Ansicht eines erfindungsgemäßen Windkraftgetriebes von der Abtriebsseite aus betrachtet.

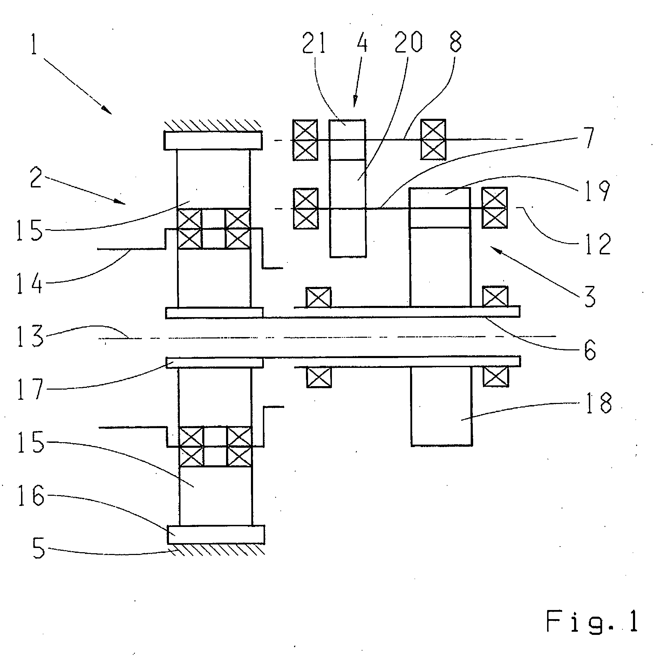

Der prinzipielle Aufbau eines Windkraftgetriebe 1, das diese Erfindung betrifft, ist in Fig. 1 dargestellt. Der Planetenträger 14 einer eingangsseitig angeordneten Planetenradstufe 2 ist fest mit dem nicht dargestellten Rotor der Windkraftanlage verbunden. Mehrere Planetenräder 15 sind rotierbar auf dem Planetenträger 14 angeordnet und stehen mit dem Hohlrad 16 und mit dem Sonnenrad 17 im Eingriff. Das Hohlrad ist fest mit dem Getriebegehäuse 5 verbunden. Das Sonnenrad 17 ist fest verbunden mit der Sonnenradwelle 6, die im Getriebegehäuse rotierbar um eine zentrale Mittelachse 13 gelagert ist.

Fest mit der Sonnenradwelle verbunden ist ein erstes Stirnrad 18 einer ersten Stirnradstufe 3. Das erste Stirnrad 18 steht im Eingriff mit einem zweiten Stirnrad 19 der ersten Stirnradstufe 3, wobei das zweite Stirnrad 19 fest mit einer Zwischenwelle 7 verbunden ist. Die Zwischenwelle 7 ist im Gehäuse rotierbar um die Mittelachse 12 gelagert. Die Mittelachsen 12 der Zwischenwelle und die Mittelachse 13 der Sonnenradwelle sind parallel zueinander angeordnet.

Eine zweite Stirnradstufe 4 umfasst die beiden Stirnräder 20 und 21, wovon das antriebsseitige Stirnrad 20 fest mit der Zwischenwelle 7 verbunden ist und das abtriebsseitige Stirnrad 21 auf einer Abtriebswelle 8 befestigt ist. Das abtriebsseitige Stirnrad 21 kann auch einstückig mit der Abtriebswelle 8 ausgeführt sein.

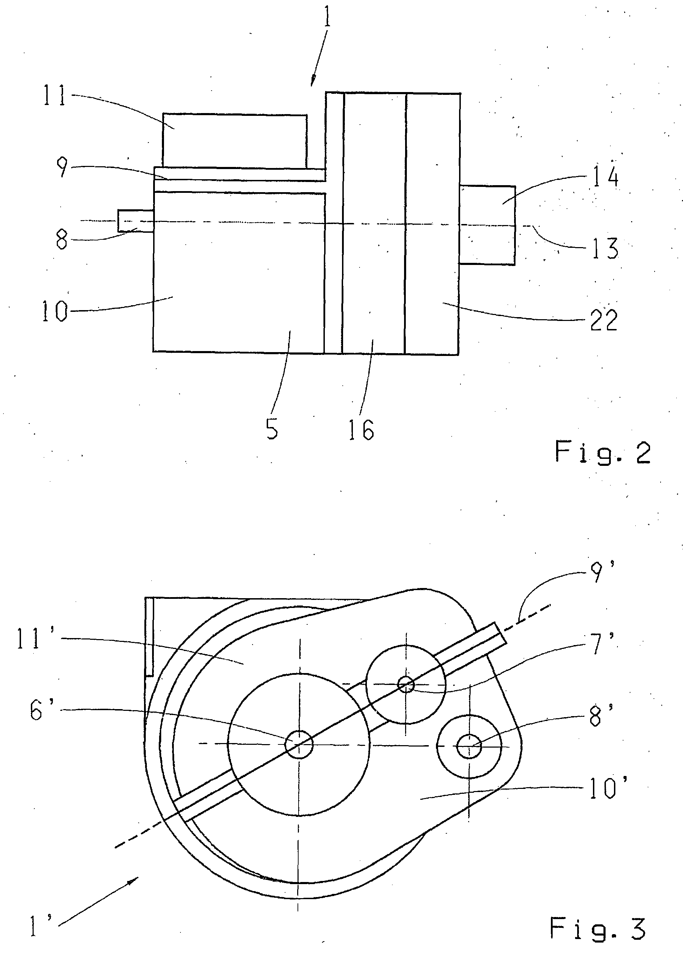

Die Fig. 2 zeigt das Windkraftgetriebe 1, bei dem antriebsseitig die Nabe des Planetenträgers 14 der Planetenradstufe 2 angeordnet ist, auf der der nicht dargestellte Rotor der Windkraftanlage befestigt wird. Das Getriebegehäuse 5 besteht zumindest aus zwei Teilen, nämlich dem Gehäusehauptteil 10 und dem Gehäuse deckel 11. Zwischen dem Gehäusehauptteil 10 und dem Gehäusedeckel 11 verläuft die Trennfuge 9. Am abtriebsseitigen Ende des Windkraftgetriebes 1 ragt die Abtriebswelle 8 aus dem Getriebegehäuse 5 hinaus und ist antriebswirksam mit dem Rotor eines Generators der Windkraftanlage verbunden.

Der Gehäusehauptteil 10, in dem die Stirnradstufen 3 und 4 angeordnet sind, kann auch ein Gehäuse der Planetenradstufe 2 umfassen und einteilig mit diesem Gehäuse ausgebildet sein. In der Ausführung gemäß Fig. 2 ist beispielsweise der Gehäusehauptteil 10 des Stirnradsatzes einteilig mit dem abtriebsseitigen Gehäuseteil der Planetenradstufe 2 ausgebildet. Das Hohlrad 16 und ein rotorseitiges Gehäuseteil 22 der Planetenradstufe 2 bilden weitere Teile des gesamten Getriebegehäuses 5.

In der Darstellung der Fig. 2 ist erkennbar, dass der Gehäusedeckel 11 im Verhältnis zum Gehäusehauptteil 10 deutlich kleiner ist und dadurch eine deutlich kleinere Masse aufweist, so dass er zu Wartungs- und Instandhaltungszwecken verhältnismäßig einfach gehandhabt werden kann. Die Masse des Gehäusedeckels 11 dieser Ausführung beträgt weniger als die Hälfte der Masse des Gehäusehauptteiles 10, sodass der Gehäusedeckel einfach handhabbar ist. Er kann beispielsweise mit einem an der Gondel der Windkraftanlage installierten Bordkran angehoben werden.

Dagegen zeigt Fig. 3 die Anordnung einer Trennfuge 9' in einem Gehäuse eines Windkraftgetriebes 1' aus dem Stand der Technik, bei dem die Trennfuge 9' durch die Mittelachsen zweier parallel angeordneter Getriebewellen 6' und 7' verläuft, wodurch sich wesentlich größere Abmaße und eine erheblich größere Masse des Getriebedeckels 11' ergeben. Die Trennfuge 9' liegt hier in einer Ebene mit den Mittelachsen der Sonnenradwelle 6' und der Zwischenwelle 7'. Zwar sind hier nach dem Ausbau des Getriebedeckels 11' beide Getriebewellen 6' und 7' zugänglich, aber eine einfache Handhabung des Getriebedeckels 11' ist aufgrund seiner großen Abmessungen und Masse nicht mehr möglich.

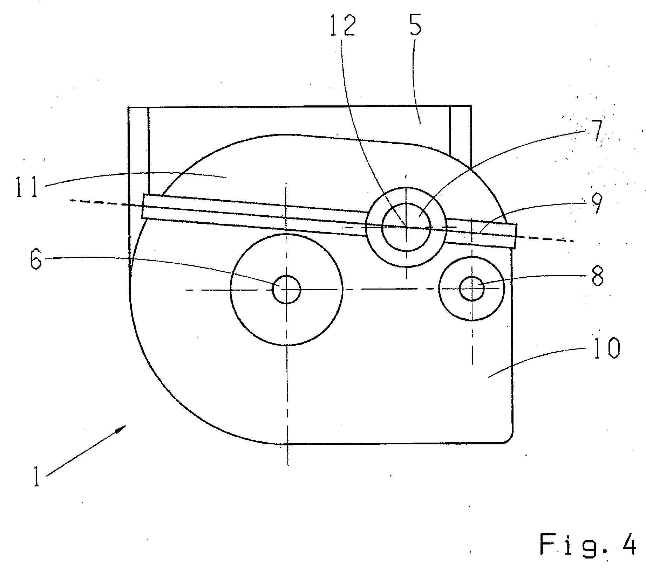

In Fig. 4 ist die erfindungsgemäße Anordnung in Blickrichtung von der Abtriebs- bzw. Generatorseite her dargestellt. Das gesamte Getriebegehäuse 5 besteht zumindest aus zwei Teilen, nämlich dem Gehäusehauptteil 10 und dem Gehäusedeckel 11. Zwischen dem Gehäusehauptteil 10 und dem Gehäusedeckel 11 verläuft die Trennfuge 9. Auch hier ist erkennbar, dass der Gehäusedeckel 11 im Verhältnis zum Gehäusehauptteil 10 deutlich kleiner ist und dadurch eine deutlich kleinere Masse aufweist, sodass er zu Wartungs- und Instandhaltungszwecken verhältnismäßig einfach gehandhabt werden kann.

Die Mittelachsen der drei Getriebewellen, nämlich der Sonnenradwelle 6, der Zwischenwelle 7 und der Abtriebswelle 8 bilden in dieser Ansicht ein Dreieck, wobei die Mittelachse 12 der Zwischenwelle 7 am höchsten Punkt des Dreiecks angeordnet ist. Die durch diesen Punkt verlaufende Trennfuge 9 verläuft in nahezu horizontaler Richtung. Dies erlaubt ein einfaches Abheben des Gehäusedeckels 11 in vertikaler Richtung. Wird der Gehäusedeckel 11 entfernt, kann die komplette Wellenbaugruppe der Zwischenwelle 7 entfernt werden. Zudem wird der Zugang zum Innenraum des Getriebes bei entferntem Gehäusedeckel 11 deutlich erleichtert. Ein weiterer Vorteil dieser Bauart ergibt sich dadurch, dass sich der Ölsumpf ausschließlich im unteren Teil des Getriebegehäuses 5 befindet, wodurch die Gefahr einer Leckage im Bereich der Trennfuge 9 verringert wird.

### Bezugszeichen

- 1: Windkraftgetriebe
- 2: Planetenradstufe
- 3: ersten Stirnradstufe
- 4: zweite Stirnradstufe
- 5: Getriebegehäuse
- 6: Sonnenradwelle
- 7: Zwischenwelle
- 8: Abtriebswelle
- 9: Trennfuge
- 10: Gehäusehauptteil
- 11: Gehäusedeckel
- 12: Mittelachse der Zwischenwelle
- 13: Mittelachse der Sonnenradwelle
- 14: Planetenträger
- 15: Planetenrad
- 16: Hohlrad
- 17: Sonnenrad
- 18: Stirnrad
- 19: Stirnrad
- 20: Stirnrad
- 21: Stirnrad
- 22: rotorseitiges Gehäuseteil der Planetenradstufe

## Patentansprüche

1. Windkraftgetriebe (1) mit einer antriebsseitig angeordneten Planetenradstufe (2) und mit einer ersten Stirnradstufe (3) und einer zweiten Stirnradstufe (4), die nach der Planetenradstufe (2) in einem Getriebegehäuse (5) angeordnet sind, wobei die erste Stirnradstufe (3) eine Sonnenradwelle (6) der Planetenradstufe (2) mit einer Zwischenwelle (7) drehwirksam verbindet, wobei die zweite Stirnradstufe (4) die Zwischenwelle (7) mit einer Abtriebswelle (8) drehwirksam verbindet, und wobei nur eine Zwischenwelle (7) vorgesehen ist, und wobei das Getriebegehäuse (5) eine Trennfuge (9) aufweist, entlang derer das Getriebegehäuse (5) in ein Gehäusehauptteil (10) und einen Gehäusedeckel (11) teilbar ist, und wobei die Trennfuge (9) durch die Mittelachse (12) der Zwischenwelle (7) verläuft, **dadurch gekennzeichnet, dass** die Trennfuge (9) beabstandet von der Mittelachse (13) der Sonnenradwelle (6) verläuft.

2. Vindkraftgetriebe nach Anspruch 1, **dadurch gekennzeichnet, dass** der Gehäusedeckel (11) in Bezug auf seine Größe und seine Masse derart ausgestaltet ist, dass der Gehäusedeckel (11) und die Zwischenwelle (7) von einem Bordkran einer Gondel einer Windkraftanlage aus dem Windkraftgetriebe (1) ausbaubar sind.

3. Windkraftgetriebe nach Anspruch 2, **dadurch gekennzeichnet, dass** die Masse des Gehäusedeckels (11) höchstens die Hälfte der Masse des Gehäusehauptteiles (10) beträgt.

4. Windkraftgetriebe nach Anspruch 1, 2 oder 3, **dadurch gekennzeichnet, dass** die Trennfuge (9) im eingebauten Zustand des Windkraftgetriebes (1) oberhalb der Sonnenradwelle (6) angeordnet ist.

## Claims

1. Wind turbine gearbox (1) having a planet-gear stage (2) arranged at a drive-input side and having a first spur-gear stage (3) and a second spur-gear stage (4) arranged downstream of the planet-gear stage (2) in a gearbox housing (5), wherein the first spur-gear stage (3) connects a sun-gear shaft (6) of the planet-gear stage (2) in terms of rotational action to an intermediate shaft (7), wherein the second spur-gear stage (4) connects the intermediate shaft (7) in terms of rotational action to a drive-output shaft (8), and wherein only one intermediate shaft (7) is provided, and wherein the gearbox housing (5) has a parting joint (9) along which the gearbox housing (5) can be divided into a housing main part (10) and a housing cover (11), and wherein the parting joint (9) runs through the central axis (12) of the intermediate shaft (7), **characterized in that** the parting joint (9) runs spaced apart from the central axis (13) of the sun-gear shaft (6).

2. Wind turbine gearbox according to Claim 1, **characterized in that** the housing cover (11) is designed, in terms of its size and its mass, such that the housing cover (11) and the intermediate shaft (7) can be dismounted from the wind turbine gearbox (1) by way of an on-board crane of a nacelle of a wind turbine.

3. Wind turbine gearbox according to Claim 2, **characterized in that** the mass of the housing cover (11) amounts to at most half of the mass of the housing main part (10).

4. Wind turbine gearbox according to Claim 1, 2 or 3, **characterized in that**, in the installed state of the wind turbine gearbox (1), the parting joint (9) is arranged above the sun-gear shaft (6).

## Revendications

1. Transmission d'éolienne (1) comprenant un étage de pignon planétaire (2) disposé du côté de l'entraînement et un premier étage de pignon droit (3) et un deuxième étage de pignon droit (4) qui sont disposés après l'étage de pignon planétaire (2) dans un boîtier de transmission (5), le premier étage de pignon droit (3) reliant un arbre de roue solaire (6) de l'étage de pignon planétaire (2) à un arbre intermédiaire (7) de manière active en rotation, le deuxième étage de pignon droit (4) reliant l'arbre intermédiaire (7) à un arbre de sortie (8) de manière active en rotation, et seulement un arbre intermédiaire (7) étant prévu, et le boîtier de transmission (5) présentant un joint de séparation (9) le long duquel le boîtier de transmission (5) peut être divisé en une partie principale de boîtier (10) et un couvercle de boîtier (11), et le joint de séparation (9) s'étendant à travers l'axe médian (12) de l'arbre intermédiaire (7), **caractérisée en ce que** le joint de séparation (9) s'étend à distance de l'axe médian (13) de l'arbre de roue solaire (6).

2. Transmission d'éolienne selon la revendication 1, **caractérisée en ce que** le couvercle de boîtier (11) est configuré en termes de ses dimensions et de sa masse de telle sorte que le couvercle de boîtier (11) et l'arbre intermédiaire (7) puissent être démontés de la transmission d'éolienne (1) par d'une grue de bord d'une cabine d'éolienne.

3. Transmission d'éolienne selon la revendication 2, **caractérisée en ce que** la masse du couvercle de boîtier (11) vaut au maximum la moitié de la masse de la partie principale de boîtier (10).

4. Transmission d'éolienne selon la revendication 1, 2 ou 3, **caractérisée en ce que** le joint de séparation (9), dans l'état installé de la transmission d'éolienne (1), est disposé au-dessus de l'arbre de roue solaire (6).
